# EUROPEAN PATENT SPECIFICATION

(11) **EP 2 940 298 B1**
(45) Date of publication and mention of the grant of the patent: **09.11.2016**
(21) Application number: 15001249.0
(22) Date of filing: 28.04.2015
(51) Int. Cl.: F03D 1/00

(54) **ROBOT FOR WIND POWER PLANT ROTOR BLADES INSPECTION**
ROBOTER ZUR WINDENERGIEANLAGEN-ROTORBLÄTTERINSPEKTION
ROBOT POUR L'INSPECTION DES PALES DE ROTOR D'UNE CENTRALE ÉOLIENNE

(30) Priority: 29.04.2014 PL 40805514
(43) Date of publication of application: 04.11.2015
(73) Proprietor: Politechnika Slaska, 44-100 Gliwice (PL)
(72) Inventor: Moczulski, Wojciech, 44-160 Rudno (PL); Januszka, Marcin, 44-100 Gliwice (PL); Panfil, Wawrzyniec, 44-207 Rybnik (PL); Przystalka, Piotr, 44-100 Gliwice (PL)
(74) Representative: Sielewiesiuk, Jakub

(56) References cited:
- EP-A2- 2 727 843
- WO-A1-2005/119054
- WO-A1-2013/102460
- WO-A1-2014/059964
- CN-A- 103 661 661
- DE-A1-102008 019 680
- KR-A- 20130 025 526
- US-A1- 2011 318 496
- NORBERT ELKMANN ET AL: "Robot for rotor blade inspection", APPLIED ROBOTICS FOR THE POWER INDUSTRY (CARPI), 2010 1ST INTERNATIONAL CONFERENCE ON, IEEE, PISCATAWAY, NJ, USA, 5 October 2010 (2010-10-05), pages 1-5, XP031792244, ISBN: 978-1-4244-6633-7

## Description

The invention relates to a robot for wind power plant rotor blades inspection moving across the surface of a wind power plant blade and making an inspection.

The robot communicates with the control system of the wind turbine in order to ensure a proper position of the blades during inspections.

In the known and previously used solution of the robot for wind power plant rotor blades inspection outlined in the article "Robot to inspect rotor blades" (authors: Tilo Forster, Torsten Felsch. Norbert Elkmann), a self-climbing device carried out an inspection of all types of wind power plants rotor blades. The robot has 16 degrees of freedom and is lowered on the inspection place using a system of 4 ropes. The robot frame consists of 5 arms arranged in the shape of a rectangle embracing the blade. Design of the robot provides the ability to adjust it to the section of the blade.

The patent application WO 2005/119054 A1 discloses another blade inspection robot having two sets of eight arms hingedly connected to adjust their shape to the section of the blade. The inspecting means are directly mounted on the arms.

The U.S. Patent No. 8 281442 describes a svstem for inspection and cleaning of wind power plant blades, which consists of a vehicle with a wheeled chassis and a self-balancing system, ensuring the maintenance of the robot on the leading edge of the blade. This solution makes it possible for the robot to operate only in a horizontal position of the blade.

In another known solution disclosed in the U.S. Patent No. 8 171 809, the inspection of the blade is possible by means of circuits mounted on a device moving across the wind power station pole. The solution enables a non-contact inspection of the blade by means of a laser measuring apparatus. The aim of the invention is to improve its movement along the wind power plant blade and to allow inspection of surfaces and edges of the blade.

The essence of the invention can be described as follows: the supporting structure consists of seven robot arms: a first arm, a second arm, a third arm, a fourth arm, a fifth arm, a sixth arm and a seventh arm, wherein the first arm and the second arm, the first arm and the third arm, the third arm and the fifth arm, the second arm and the fourth arm, the sixth arm and the fourth, the seventh arm and the fifth arm are hingedly connected with one rotational degree of freedom, and the angular position between the arms is determined by drive systems, wherein at joints between the second and fourth arms and between the third and fifth arms, there are attached scanning arms eight and nine with a number of mounting holes, and the sixth arm is attached to a guide wheel. The seventh arm is attached to another guide wheel rolling on the surface of the blade, the first arm is fixed to a third guide wheel rolling on the trailing edge of the blade.

Each scanning arm performs a rotary movement in one plane thanks to a drive system and its length is greater than half the width of the wind power plant blade in its widest cross-section.

The third guide wheel is grooved on its concave rolling surface.

The surface of the first and second wheels is convex and is in contact with the surface of the blade on the side of the leading edge.

An advantage of the invention is the ability to simultaneously scan both trailing surfaces, leading edges and trailing edges of the blade by means of measuring devices attached to the ends of the scanning arms. Inspection is performed during a single pass of the robot along the blade. Scanning arms that are on both sides of the blades perform a rotary or swinging movement while scanning the blade surface.

With a circular drive system and adjustable structure of robot arms, the can move along the wind power plant blade in order to carry out the inspection without using safety ropes. Operation of the invention allows to adjust the position of guide wheels and pressure to the blade so as to ensure continuous contact with the blade and make it possible for the robot to brake while moving from the end of the blade to the turbine hub with the blade being in the upper position parallel to the direction of gravity. The use of electric brakes and appropriately arranged robot arms allows the robot to brake in motion.

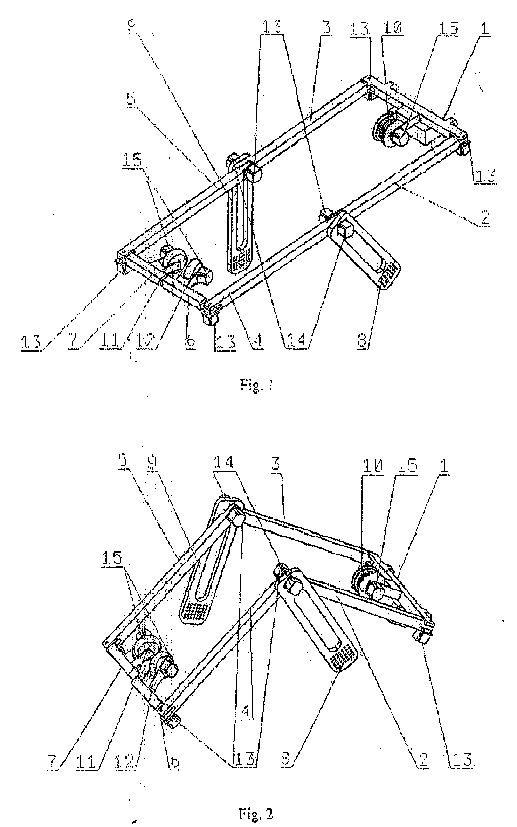

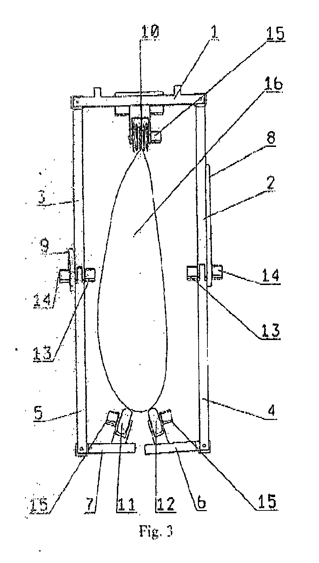

The invention is illustrated in the accompanying drawings, in which Fig. 1 shows a robot in an extended position, fig. 2 shows the robot in a partially folded position, Fig. 3 shows a method of mounting the robot on the blade.

Robot for power plant blades inspection according to the invention comprises seven arms (1) to (7). Connections between the arms are articulated with one rotary degree of freedom, and an angular position between the arms is determined by means of drive systems (13). The total length of each pair of arms (2) and (4) and (3) and (5) is greater than the width of the blade (16) in the widest cross-section. In the robot structure, according to the invention, in the articulated connection between arms (2) and (4) and (3) and (5), there are attached scanning arms (8) and (9) with a series of mounting holes, wherein the length of the scanning arms (8) and (9) is greater than half the width of the blade (16) of a wind power plant in the widest cross-section. Each scanning arm (8) and (9) can perform a rotary movement in one plane in the range of 0-360 degrees. It is driven by a motor (14) connected to a gear mechanism and an electric brake. Moreover, a guide wheel (12) is attached to arm (6) and a guide wheel (11) is attached to arm (7). These wheels are in contact with the surface of the blade (16), while arm (1) has a third guide wheel (10), which, on its concave rolling surface, is grooved. The surface of the guide wheels (11) and (12) is convex and is in contact with the surface of the blade on the side of the leading edge. All guide wheels are driven by drive systems (15) connected to a transmission and an electric brake.

Upon placement of the robot on a blade, the grooved wheel is adjacent to trailing edges of the blade, while the wheels with a convex rolling surface are adjacent to the surface of the blade leading edge. The robot communicates with the control system of the wind power plant in order to ensure a position of the blade on which it is mounted in such a way that the blade be located above the nacelle of a wind turbine, parallel to the direction of gravity.

## Claims

1. Robot for inspection of wind power plant blades (16) **characterized in that** the robot comprises:
a support structure consisting of seven arms: first arm (1). second arm (2). third arm (3), fourth arm (4), fifth arm (5), sixth arm (6) and seventh arm (7),
and three guide wheels: a first wheel (11). a second wheel (12) and a third wheel (10),
wherein the first arm (1) and the second arm (2), the first arm (1) and the third arm (3), the third arm (3) and the fifth arm (5), the second arms (2) and the fourth arm (4), the sixth arm (6) and the fourth arm (4), the seventh arm (7) and the fifth arm (5) are hingedly connected with one rotational degree of freedom, and the angular position between the arms is determined by drive systems (13),
and **in that** the robot further comprises:
two scanning arms (8) and (9) with a number of amounting holes fixed at joints between the second arms (2) and the fourth arm (4), any between the third arm (3) and the fifth arm (5),
the length of the scanning arms (8) and (9) being greater than half the width of the blade (16) in the widest cross-section,
wherein, during scanning the blade surface, the scanning arms (8) and (9), located on both sides of the blade (16), perform a rotary or swinging movement,
and wherein the sixth arm (6) is fixed to the second wheel (12), the seventh arm (7) is fixed to the first wheel (11), these two guide wheels rolling on the surface of the blade (16), and the first arm (1) is fixed to the third wheel (10) rolling on the trailing edge of the blade (16).

2. The robot according to claim 1, **characterized in that** the scanning arm (8) and the scanning arm (9) each rotates in one plane by means of a motor (14).

3. The robot according to claim 1. **characterized in that** the third guide wheel (10) is grooved on its concave rolling surface.

4. The robot according to claim 1, **characterized in that** the surface of the first and the second guide wheels (11, 12) is convex and is in contact with the surface of the blade (16) on the side of the leading edge.

5. The robot according to claim 1, **characterized in that** the guide wheels (10, 11, 12) are driven by drive systems (15) connected to a transmission and an electric brake and the robot structure is adjustable between an extended position and a folded position so that the position and pressure of the wheels can be adjusted to assure continuous contact with the blade (16) and so that the robot can brake while moving parallel to the direction of gravity.

## Patentansprüche

1. Roboter zur Inspektion von Blättern (16) einer Windkraftanlage, **dadurch gekennzeichnet, dass** der Roboter umfasst:
die Stützstruktur, bestehend aus sieben Armen: aus dem ersten Arm (1), dem zweiten Arm (2), dem dritten Arm (3), dem vierten Arm (4), dem fünften Arm (5),
dem sechsten Arm (6) und dem siebten Arm (7),
und drei Führungsräder: das erste Rad (11), das zweite Rad (12) und das dritte Rad (10),
wobei
der erste Arm (1) und der zweite Arm (2), der erste Arm (1) und der dritte Arm (3), der dritte Arm (3) und der fünfte Arm (5), der zweite Arm (2) und der vierte Arm (4), der sechste Arm (6) und der vierte Arm (4), der siebte Arm (7) und der fünfte Arm (5) sind gelenkig mit einem Rotationsfreiheitsgrad verbunden und die Winkellage zwischen den Armen durch Antriebssysteme bestimmt wird (13),
und **dadurch gekennzeichnet, dass** der Roboter ferner umfasst:
zwei Scanning-Arme (8) und (9), die mit einer Anzahl von Befestigungslöchern an den Verbindungen zwischen dem zweiten Arm (2) und dem vierten Arm (4) und zwischen dem dritten Arm (3) und dem fünften Arm (5) befestigt sind,
die Länge der Scanning-Arme (8) und (9) ist größer als die Hälfte der Breite eines Rotorblattes (16) in seinem breitesten Querschnitt,
wobei während des Scannens die Blattoberfläche, die Scanning-Arme (8) und (9), die sich auf beiden Seiten des Blattes (16) befinden, eine Dreh- oder Schwenkbewegung durchzuführen,
und wobei der sechste Arm (6) mit dem zweiten Rad (12) und der siebte Arm (7) mit dem ersten Rad (11) befestigt ist, und diese beiden Führungsräder auf der Oberfläche des Blattes (16) rollen, und der erste Arm (1) mit dem dritten Rad (10) befestigt ist, das an der Hinterkante des Blattes (16) rollt.

2. Roboter nach Anspruch 1, **dadurch gekennzeichnet, dass** sich der Scanning-Arm (8) und der Scanning-Arm (9) jeweils in einer Ebene über einen Motor drehen.

3. Roboter nach Anspruch 1, **dadurch gekennzeichnet, dass** das dritte Führungsrad (10) auf seiner konkaven Lauffläche gerillt ist.

4. Roboter nach Anspruch 1, **dadurch gekennzeichnet, dass** die Oberfläche des ersten und des zweiten Führungsrades (11, 12) konvex ausgebildet ist und sich in Kontakt mit der Oberfläche des Blattes (16) auf der Seite der Vorderkante befindet.

5. Roboter nach Anspruch 1, **dadurch gekennzeichnet, dass** die Führungsräder (10, 11, 12) durch Antriebssysteme (15) angetrieben werden, die mit einem Getriebe verbunden sind, und eine elektrische Bremse und die Roboterkonstruktion zwischen einer ausgeklappten Position und einer zusammengeklappten Position einstellbar sind, so dass die Position und den Druck der Räder so eingestellt werden kann, dass der kontinuierlichem Kontakt mit einem Blatt (16) gewährleistet wird und so, dass der Roboter während der parallelen Bewegung gegenüber der Richtung der Schwerkraft bremsen kann.

## Revendications

1. Robot pour l'inspection des pales d'éolienne (16), **caractérisé en ce que** le robot comprend:
une structure de support constituée par sept bras : un premier bras (1), un deuxième bras (2), un troisième bras (3), un quatrième bras (4), un cinquième bras (5), un sixième bras (6) et un septième bras (7),
et trois roues de guidage : une première roue (11), une deuxième roue (12) et une troisième roue (10),
où
le premier bras (1) et le deuxième bras (2), le premier bras (1) et le troisième bras (3), le troisième bras (3) et le cinquième bras (5), le deuxième bras (2) et le quatrième bras (4), le sixième bras (6) et le quatrième bras (4), le septième bras (7) et le cinquième bras (5) sont reliés de manière articulée avec un degré de liberté de rotation, et la position angulaire entre les bras est déterminée par des systèmes d'entraînement (13),
et **en ce que** le robot comprend en outre :
deux bras de balayage (8) et (9) avec un nombre de trous de montage fixés au niveau des joints entre le deuxièmes bras (2) et le quatrième bras (4), et entre le troisième bras (3) et le cinquième bras (5),
la longueur des bras de balayage (8) et (9) étant plus grande que la moitié de la largeur de la pale (16) dans la plus large section transversale,
où pendant le balayage de la surface de la pale, les bras de balayage (8) et (9), situés sur les deux côtés de la pale (16), effectuent un mouvement rotatif ou pivotant,
et où le sixième bras (6) est fixé à la deuxième roue (12), le septième bras (7) est fixé à la première roue (11), ces deux roues de guidage roulant sur la surface de la pale (16), et le premier bras (1) est fixé à la troisième roue (10) roulant sur le bord de fuite de la pale (16).

2. Le robot selon la revendication 1, **caractérisé en ce que** le bras de balayage (8) et le bras de balayage (9) chacun tourne dans un seul plan au moyen d'un moteur.

3. Le robot selon la revendication 1, **caractérisé en ce que** la troisième roue de guidage (10) est rainurée sur sa surface de roulement concave.

4. Le robot selon la revendication 1, **caractérisé en ce que** la surface de la première et deuxième roue de guidage (11, 12) est convexe et est en contact avec la surface de la pale (16) sur le côté du bord de tête.

5. Le robot selon la revendication 1, **caractérisé en ce que** les roues de guidage (10, 11, 12) sont entraînées par des systèmes d'entraînement (15) reliés à une transmission et un frein électrique et la structure de robot est réglable entre une position déployée et une position repliée, de telle sorte que la position et la pression des roues peuvent être ajustées pour assurer un contact continu avec la pale (16) et de telle sorte que le robot peut freiner en se déplaçant parallèlement à la direction de la gravité.
